(19) 

Europäisches
Patentamt
European
Patent Office
Office européen
des brevets

(11) **EP 4 564 025 A1**

(12) **EUROPEAN PATENT APPLICATION**
published in accordance with Art. 153(4) EPC

(43) Date of publication:
**04.06.2025 Bulletin 2025/23**

(21) Application number: **23855136.0**

(22) Date of filing: **16.08.2023**

(51) International Patent Classification (IPC):
*G01R 31/367* $^{(2019.01)}$     *G01R 31/36* $^{(2020.01)}$
*G01R 31/374* $^{(2019.01)}$    *G01R 31/396* $^{(2019.01)}$
*G01R 31/382* $^{(2019.01)}$    *G01R 19/30* $^{(2006.01)}$
*H01M 10/48* $^{(2006.01)}$

(52) Cooperative Patent Classification (CPC):
**G01R 19/30; G01R 31/36; G01R 31/367;**
**G01R 31/374; G01R 31/382; G01R 31/396;**
**H01M 10/48**

(86) International application number:
**PCT/KR2023/012078**

(87) International publication number:
**WO 2024/039169 (22.02.2024 Gazette 2024/08)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.08.2022   KR 20220101842**

(71) Applicant: **LG Energy Solution, Ltd.**
**Seoul 07335 (KR)**

(72) Inventors:
• **LEE, Dong Hoon**
  **Daejeon 34122 (KR)**
• **KIM, Hyeong Seok**
  **Daejeon 34122 (KR)**
• **KO, Yo Han**
  **Daejeon 34122 (KR)**
• **PARK, Joo Nam**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR SIMULATING CHARGING-DISCHARGING BEHAVIOR OF SECONDARY BATTERY**

(57)     The present application may provide: a method for simulating charging and discharging behavior of a secondary battery; a hardware device in which the method is stored; and a battery management device in which the method is stored. The present application may provide: a method capable of simulating, in a relatively simple way, charging and discharging behavior of a secondary battery to have high consistency with actual behavior; and a hardware device and a battery management device in which the relevant method is stored.

Fig. 4

**EP 4 564 025 A1**

## Description

### Technical Field

This application claims the benefit of priority based on Korean Patent Application No. 10-2022-0101842 dated August 16, 2022, the disclosure of which is incorporated herein by reference in its entirety.

The present application relates to a method for simulating charging and discharging behavior of a secondary battery, a hardware device in which the method is stored, and a battery management device in which the method is stored.

### Background Art

A secondary battery is a device, which can be charged and discharged, capable of converting electrical energy in the form of chemical energy to be stored, and then generating electricity when needed.

With the expansion of the electric vehicle market, and the like, there is a demand for development of secondary batteries having and capable of realizing high energy densities.

It is important to accurately identify the condition and lifespan, and the like of the secondary battery in terms of deriving maximum performance within a safe range, and increasing an application freedom degree of the secondary battery.

To this end, there are various modeling methods for secondary batteries.

For example, an electric circuit model (or equivalent model) is a method of modeling input and output characteristics of a secondary battery through a configuration of an electric circuit, which can be implemented by changing the element configuration depending on the type of secondary battery. This method has advantages of being simple and having computationally low-cost, but is not effective in terms of accuracy.

As another method, an electrochemical model method, is also known. The electrochemical model method is also called a physical equation model method. This method is based on the detailed configurations of chemical actions that occur inside the secondary battery. This method is modeling that formalizes the physical movements of the internal particles of the secondary battery by partial differential equations (PDE) and space-time ordinary differential equations (ODE). The electrochemical modeling method is somewhat complicated in calculation, but it has high accuracy, and issues due to the complexity of the calculation are also reduced with the development of computer hardware.

However, even in the electrochemical modeling method, supplementation is required to accurately simulate the charging and discharging behavior of the secondary battery. The electrochemical modeling method has a disadvantage that a so-called hysteresis of the charging and discharging of the secondary battery is not reflected.

The hysteresis of the secondary battery means a difference between voltages occurring when the secondary battery is charged to a certain charging state to reach the state and when it is discharged to reach the state, which is a phenomenon in which charging and discharging occur differently at the same charge amount (state of charge).

Because such a phenomenon is nonlinear and has a significant impact on the performance of secondary batteries, it is important to accurately predict this phenomenon.

### Disclosure

### Technical Problem

The present application is intended to provide a method for simulating charging and discharging behavior of a secondary battery, a hardware device in which the method is stored, and a battery management device in which the method is stored. The present application is intended to provide a method capable of simulating, in a relatively simple way, charging and discharging behavior of a secondary battery to have high consistency with actual behavior, and a hardware device and a battery management device in which the relevant method is stored.

### Technical Solution

This specification discloses a method for simulating charging and discharging behavior of a secondary battery.

The method may comprise steps of: simulating charging and discharging behavior of a secondary battery through electrochemical modeling; and applying hysteresis modeling to correct the simulation results by the electrochemical modeling.

In the above method, the step of simulating the charging and discharging behavior of the secondary battery through electrochemical modeling may be performed using DFN (Doyle-Fuller-Newman) modeling.

Here, the step of simulating the charging and discharging behavior of the secondary battery through electrochemical modeling may be performed using one or more of Equations 1 to 5 below.

[Equation 1]

$$\frac{\partial C_s}{\partial t} = D_s \frac{\partial^2 C_s}{\partial r^2} + \frac{2D_s}{r} \frac{\partial C_s}{\partial r}$$

In Equation 1, Cs is a concentration (unit: mol/m$^3$) of lithium in a solid particle phase, r is the radius (unit: m) of the particle, and Ds is a diffusion coefficient (unit: cm$^2$/s) of lithium (Li-ion diffusion coefficient).

[Equation 2]

$$\frac{\partial(\varepsilon_e c_e)}{\partial t} = \nabla \cdot (D_{e,eff} \nabla c_e) + a_s(1 - t_+^0)j$$

In Equation 2, $\varepsilon_e$ is a volume fraction of an electrolyte, $D_{e,eff}$ is a diffusion coefficient (unit: cm$^2$/s) of an electrolyte medium, and $c_e$ is a concentration (unit: mol/m$^3$) of an electrolyte.

[Equation 3]

$$\nabla \cdot (\sigma_{eff} \nabla \Phi_s) = a_s F j$$

In Equation 3, $\sigma_{eff}$ is an effective electrical conductivity (unit: S/cm) of a solid phase, $\Phi_s$ is a potential (unit: V) of a solid phase, and $\alpha_s$ is a specific interfacial area (unit: m$^2$/m$^3$) between solids, F is Faraday's constant (96,487 C/eq), and j is a molar flux of lithium passing through the boundary between the solid phase and the electrolyte.

[Equation 4]

$$\nabla \cdot (\kappa_{eff} \nabla \Phi_e + \kappa_{D,eff} \nabla \ln c_e) + a_s F j = 0$$

In Equation 4, $\kappa_{eff}$ is an effective ionic conductivity (S/cm) of an electrolyte, $\Phi_e$ is a potential (unit: V) of an electrolyte, $c_e$ is a concentration of an electrolyte, and $\alpha_s$ is a specific interfacial area (unit: m$^2$/m$^3$) between solids, F is Faraday's constant (96,487 C/eq), and j is a molar flux of lithium passing through the boundary between the solid phase and the electrolyte.

[Equation 5]

$$i = i_0^a \left[ exp(\frac{\alpha_a F}{RT} \eta) - exp(-\frac{\alpha_c F}{RT} \eta) \right]$$

In Equation 5, i is a current density (unit: A/cm$^2$) passing through an interface, $i_0$ is an exchange current density (unit: A/cm$^2$) for an electrode and an electrolyte interface, $\alpha_a$ is a charge transfer coefficient of an anodic reaction, $\alpha_c$ is a charge transfer coefficient of a cathodic reaction, $\eta$ is an over potential, F is the Faraday constant, R is the gas constant, and T is an absolute temperature (unit: K).

Here, in the step of simulating the charging and discharging behavior of the secondary battery through electrochemical modeling, all of Equations 1 to 5 above may be used.

Here, the step of applying hysteresis modeling to correct the simulation results by electrochemical modeling may be a step of converging the hysteresis when switching from charging to discharging and when switching from discharging to charging from the simulation results by the electrochemical modeling over time.

Here, the step of applying hysteresis modeling to correct the simulation results by electrochemical modeling may be performed using Equation 6 below.

[Equation 6]

$$\frac{dh(z,t)}{dz} = \gamma sgn(z^{\cdot})(M(z,z^{\cdot}) - h(z,t))$$

In Equation 6, h is the voltage deviation by hysteresis, z is the SOC (state of charge) or the stoichiometry of a material, and M is the maximum voltage gap in the major hysteresis loop, and $\gamma$ is the regulation constant.

This specification also discloses a hardware device, wherein the method or algorithm (algorithm by the method) is stored.

This specification also discloses a battery management device or battery management system, wherein the method or algorithm (algorithm by the method) is stored.

**Advantageous Effects**

The present application may provide: a method for simulating charging and discharging behavior of a secondary battery; a hardware device in which the method is stored; and a battery management device in which the method is stored. The present application may provide: a method capable of simulating, in a relatively simple way, charging and discharging behavior of a secondary battery to have high consistency with actual behavior; and a hardware device and a battery management device in which the relevant method is stored.

**Description of Drawings**

Figure 1 is a flowchart showing a process of performing the method of the present application.

Figure 2 is a schematic diagram of a structure of a battery cell which is applicable upon modeling.

Figure 3 is an example of simulation results applying electrochemical modeling.

Figure 4 is an example of results correcting the results of Figure 3 through hysteresis modeling.

Figure 5 is a view showing M values confirmed as a function of SOC (state of charge).

Figure 6 is views showing how the optimized $\gamma$ values at SOC 50 are applied to OCV calculation.

Figure 7 is views showing the charging and discharging behavior of the battery simulated in Figure 4.

**Mode for Invention**

The present application relates to a method for simulating charging and discharging behavior of a secondary battery. In simulating the charging and discharging behavior of the secondary battery, the present application combines so-called electrochemical modeling method and hysteresis modeling method.

Particularly, by appropriately controlling, selecting, and combining the electrochemical modeling method and the hysteresis modeling method, the present application can simulate the charging and discharging behavior of the secondary battery to have high consistency with reality.

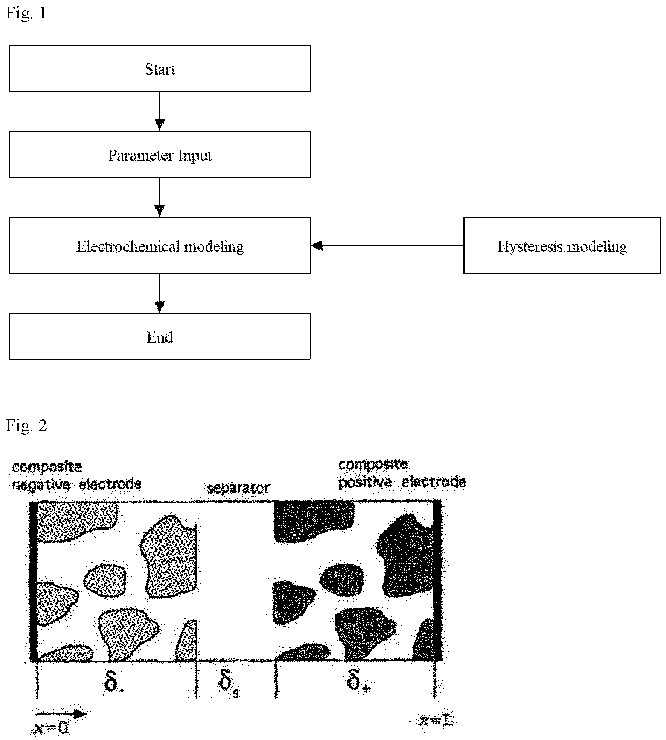

Figure 1 is a view showing how to perform the method of the present application.

As shown in Figure 1, the present application simulates the charging and discharging behavior of the secondary batter by inputting experimental parameters, and then correcting the results simulated through electrochemical modeling based on the input parameters through a hysteresis model.

Accordingly, the method of the present application may comprise a step of simulating charging and discharging behavior of a secondary battery through electrochemical modeling and a step of applying hysteresis modeling to correct the simulation results of the electrochemical modeling.

The electrochemical modeling method is modeling that formalizes the physical movements of the internal particles of the secondary battery by partial differential equations (PDE) and space-time ordinary differential equations (ODE), and the like.

Various methods for such electrochemical modeling are known.

In the present application, an appropriate method may be selected and used among known cell chemical modeling methods, but in terms of ensuring consistency with the actual secondary battery behavior after correction by hysteresis modeling, it may be advantageous that the so-called DFN (Doyle-Fuller-Newman) modeling method is applied and performed. The DFN modeling method is a method of modeling spatiotemporal changes in a concentration of lithium ions present in a porous electrode, potential, intercalation kinetics, and current density between a solid phase and an electrolyte phase, and the like.

In one example, a battery cell of the type shown in Figure 2 can be modeled in this method. In this instance, one-dimensional transport of lithium ions from one electrode to another electrode through a separator is considered.

In the modeling of the present application, so-called volume averaging is also applied. In this modeling, the positive electrode structure is regarded as being porous and heterogeneous materials. Particularly, the material has small heterogeneity, and, from a statistical point of view, it is regarded that it is uniformly distributed over all dimensions of the system. Microscale transport processes and geometric structures determine macroscopic transport characteristics. Typically, in the method, an RVE (representative volume element) is defined, the dimensions of which are sufficiently small compared to a system geometry and simultaneously are so sufficiently large that can include all macroscopic phenomena. In the volume averaging method, the microscopic equations are converted to macroscopic equations within the RVE.

In one example, the following five equations can be used as governing equations in the electrochemical modeling step of the present application.

In the present application, the modeling may be performed using any one, two or more, or all the following equations 1 to 5.

[Equation 1]

$$\frac{\partial C_s}{\partial t} = D_s \frac{\partial^2 C_s}{\partial r^2} + \frac{2 D_s}{r} \frac{\partial C_s}{\partial r}$$

In Equation 1, $C_s$ is a concentration (unit: $mol/m^3$) of lithium in a solid particle phase, r is the radius (unit: m) of the particle, and $D_s$ is a diffusion coefficient (unit: $cm^2/s$) of lithium (Li-ion diffusion coefficient).

Equation 1 above is an equation in which a so-called Fick's Law is applied, assuming that particles such as electrode materials are in the form of spherical particles and that the diffusion coefficient is independent of the concentration.

Equation 1 is affected by the following mathematical formulas 1 to 3, which are the Neumann boundary condition at the center of the particle (if r in Equation 1 is 0) and the surface of the particle (if r in Equation 1 is the radius $R_s$ of the particle).

[Mathematical Formula 1]

$$\frac{\partial C_s}{\partial t} = 0, \ at \ r = 0$$

[Mathematical Formula 2]

$$j_n = -D_s \frac{\partial C_s}{\partial r}, \ at \ r = R_s$$

[Mathematical Formula 3]

$$C_i(0, r_i) = C_i^0$$

In Mathematical Formulas 1 to 3, Cs is a concentration (unit: mol/m³) of lithium in a solid particle phase, r is the radius (unit: m) of the particle, Ds is a diffusion coefficient (unit: cm²/s) of lithium (Li-ion diffusion coefficient), $C_i^0$ is the initial concentration profile of the particle, and $j_n$ is the molar flux, and represents the rate of lithium intercalation/deintercalation reaction.

[Equation 2]

$$\frac{\partial(\varepsilon_e c_e)}{\partial t} = \nabla \cdot (D_{e,eff} \nabla c_e) + a_s(1 - t_+^0)j$$

In Equation 2, $\varepsilon_e$ is a volume fraction of an electrolyte, $D_{e,eff}$ is a diffusion coefficient (unit: cm²/s) of an electrolyte medium, and $c_e$ is a concentration (unit: mol/m³) of an electrolyte.

Equation 2 is an equation derived by volume averaging of mass conservation in an electrolyte phase of a porous electrode, which can inform changes due to concentration gradients, and the like, dependent on the electrolyte diffusion flux, of the local volumeaveraged concentration of lithium.

[Equation 3]

$$\nabla \cdot (\sigma_{eff} \nabla \Phi_s) = a_s F j$$

In Equation 3, $\sigma_{eff}$ is an effective electrical conductivity (unit: S/cm) of a solid phase, $\Phi_s$ is a potential (unit: V) of a solid phase, and $\alpha_s$ is a specific interfacial area (unit: m²/m³) between solids, F is Faraday's constant (96,487 C/eq), and j is a molar flux of lithium passing through the boundary between the solid phase and the electrolyte.

The left side of Equation 3 means the current density, and Equation 3 means that the difference in current density at any volume in the cell is equal to the net charge arriving or existing from a given volume.

In Equation 3, $\sigma_{eff}$ and $\Phi_s$ may represent the relationship in Mathematical Formula 4 below.

[Mathematical Formula 4]

$$\varepsilon_s i_s = -\sigma_{eff} \nabla \Phi_s$$

In Mathematical Formula 4, $\varepsilon_s$ means the volume fraction of the solid phase, and $i_s$ is the electric current of the solid.

[Equation 4]

$$\nabla \cdot (\kappa_{eff} \nabla \Phi_e + \kappa_{D,eff} \nabla \ln c_e) + a_s F j = 0$$

In Equation 4, $\kappa_{eff}$ is an effective ionic conductivity (S/cm) of an electrolyte, $\Phi_e$ is a potential (unit: V) of an electrolyte, $c_e$ is a concentration of an electrolyte, and $\alpha_s$ is a specific interfacial area (unit: m²/m³) between solids, F is Faraday's constant (96,487 C/eq), and j is a molar flux of lithium passing through the boundary between the solid phase and the electrolyte.

Equation 4 uses the volume averaging theorem for the liquid phase charge conservation equation, which refers to the charge continuity equation in the electrolyte. Equation 4 means that the net charge flux present in or entering the electrolyte volume is equal to the difference in current density and the logarithmic concentration gradient in the electrolyte.

Some of the variables in Equation 4 have the relationship in Mathematical Formula 5 below.

[Mathematical Formula 5]

$$\varepsilon_e \, \iota_e = \kappa_{eff} \nabla \Phi_e + \kappa_{D,eff} \nabla \ln c_e$$

In Mathematical Formula 5, $\varepsilon_e$ means the volume fraction of the electrolyte, and $\iota_e$ is the electric current of the solid.

[Equation 5]

$$i = i_0^a \left[ \exp\left(\frac{\alpha_a F}{RT} \eta\right) - \exp\left(-\frac{\alpha_c F}{RT} \eta\right) \right]$$

In Equation 5, i is a current density (unit: A/cm$^2$) passing through an interface, $\iota_0$ is an exchange current density (unit: A/cm$^2$) for an electrode and an electrolyte interface, $\alpha_a$ is a charge transfer coefficient of an anodic reaction, $\alpha_c$ is a charge transfer coefficient of a cathodic reaction, $\eta$ is an over potential, F is the Faraday constant, R is the gas constant, and T is an absolute temperature (unit: K).

Equation 5 is a governing equation simulating the movement of lithium ions between the solid phase and the electrolyte phase, which is derived by the Bulter-Volmer equation based on the assumption that the concentration of lithium ions in the electrolyte on the electrode surface is the same as the bulk concentration.

The present application performs simulation through such a cell chemical modeling method. The method of performing the simulation using the respective governing equations as described above and the experimental parameters applied at this time, and the like are well known.

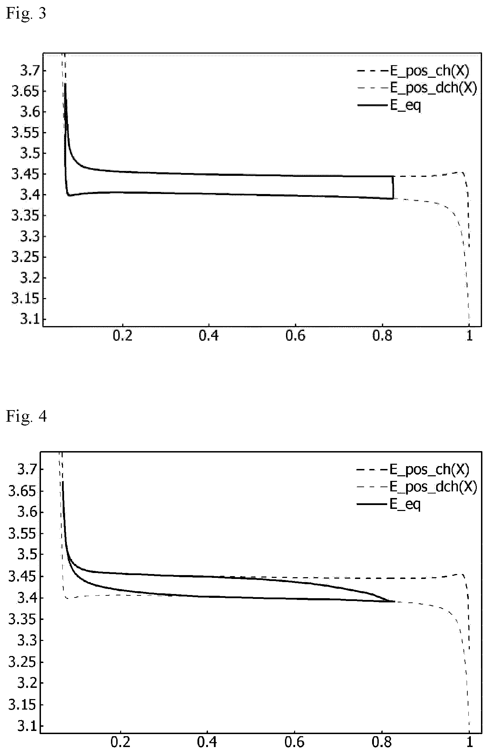

Figure 3 is a view illustratively showing simulation results applying the electrochemical modeling.

The results in Figure 3 are the results of simulating the case of performing the charging and discharging at a current of 1/50C for a coin half-cell to which an LFP (LiFePO$_4$) electrode is applied as the positive electrode, where the loading amount of the applied LFP electrode is about 3.55 mAh/cm$^2$, the porosity is about 25.6%, and the average radius of the LFP particles is about 1.5$\mu$m.

In the drawing, the results of charging and discharging simulation are indicated by red lines. As in the drawing, the electrochemical modeling obtains the results in which the voltage is rapidly changed when switching from charging to discharging or when switching from discharging to charging. However, the behavior of the actual battery is different therefrom, and accordingly, the correction for this is required.

Accordingly, the present application further performs a step of applying hysteresis modeling to correct the simulation results.

The hysteresis means a difference between voltages occurring when the secondary battery is charged to a certain charging state to reach the state and when it is discharged to reach the state, which is a phenomenon in which charging and discharging occur differently at the same charge amount (state of charge). When simulating using the electrochemical modeling, the hysteresis phenomenon is not reflected in the process of switching from charging to discharging and/or the process of switching from discharging to charging, and the voltage is calculated to change rapidly.

Therefore, the present application performs the step of correcting the simulation results by electrochemical modeling with the hysteresis modeling.

Specifically, the correction step may be performed a method of converging the hysteresis over time in the switching process of charging and discharging from the simulation results by the electrochemical modeling. Here, the switching process of charging and discharging may be when switching from charging to discharging and/or when switching from discharging to charging.

The correction process may be performed, for example, using the following governing equation (Equation 6).

[Equation 6]

$$\frac{dh(z,t)}{dz} = \gamma \, sgn(\dot{z})(M(z,\dot{z}) - h(z,t))$$

In Equation 6, h is the voltage deviation by hysteresis, z is the SOC (state of charge) or the stoichiometry of a material, and M is the maximum voltage gap in the major hysteresis loop, and $\gamma$ is the regulation constant.

Here, the regulation constants are M and $\gamma$, which are experimental values changing depending on the SOC (state of charge).

Equation 6 above is based on one-state model among various hysteresis modeling, such as combined model, simple mode, zero-state hysteresis model, and one-state model.

Equation 6, which is the governing equation, can obtain results to be consistent with the reality when the simulation results applying Equations 1 to 5 are corrected.

In Equation 6, h(z, t) is the hysteresis voltage as a function of SOC (state of charge) and time, and $z^{\cdot}$ is determined by Mathematical Formula 6 below.

[Mathematical Formula 6]

$$z^{\cdot} = \frac{dz}{dt}$$

In Equation 6, M(z, z$^{\cdot}$) is a function that gives the maximum polarization due to the hysteresis as a function of the rate-of-change of SOC (state of charge) and the SOC.

In Equation 6, M(z, z$^{\cdot}$)-h(z, t) describes that the rate-of-change of the hysteresis voltage is proportional to the distance from the major hysteresis loop, and leads to a kind of exponential decrease in voltage on the major loop.

In Equation 6, $\gamma$ is a positive constant and adjusts the degree of degrease, and sgn(z$^{\cdot}$) allows Equation 6 to function effectively during the charging and discharging process. Such a sgn(z$^{\cdot}$) has +1 in a charging situation and -1 in a discharging situation.

When obtaining the OCV (open-circuit voltage) including the hysteresis through the results from Equation 6, Equation 7 below is applied to the OCV after charging, and Equation 8 below is applied to the OCV after discharging.

[Equation 7]

OCV after charging = main hysteresis OCV in charging situation + h - M

[Equation 8]

OCV after discharging = main hysteresis OCV in discharging situation - h + M

In Equation 7, h and M are as defined in Equation 6.

The present application can correct the simulation results of the electrochemical modeling by applying such a modeling method, and thus obtain results to be consistent with the reality.

Figure 4 shows the results of correcting the results of Figure 3 in the above manner.

The correction for obtaining the results of Figure 4 has been performed by a method of obtaining the M value and $\gamma$ according to the SOC (state of charge) through experiments, and then obtaining the OCV after charging or discharging.

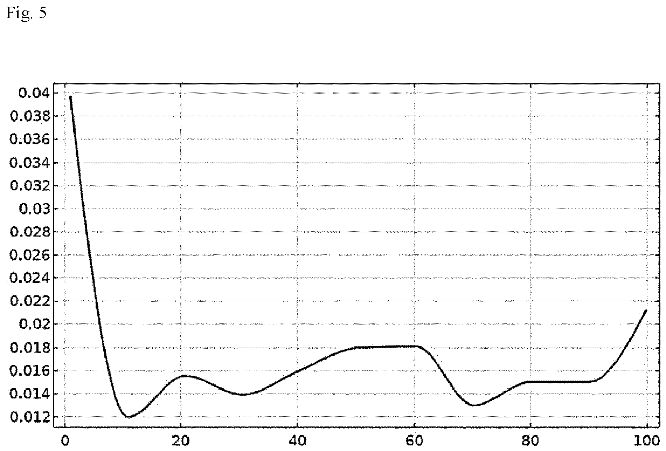

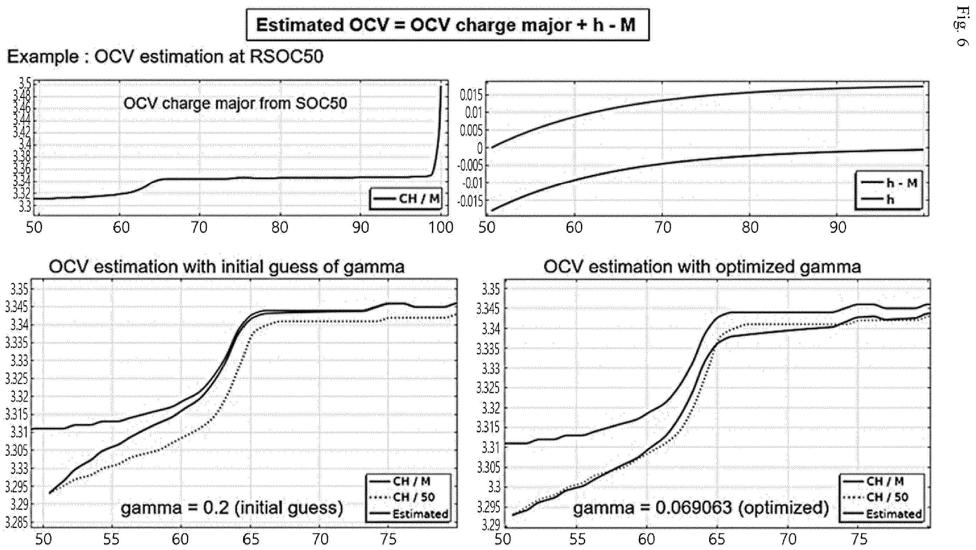

Figure 5 is a view showing the M values confirmed as a function of SOC (state of charge), and Figure 5 is a diagram showing the M value confirmed as a function of SOC (state of charge), and Figure 6 is views showing how the optimized $\gamma$ values at SOC 50 are applied to OCV calculation.

In the corrected results as in the drawings, the voltage converges to a predetermined value at a constant rate when switching from charging to discharging and when switching from discharging to charging, which corresponds to the behavior of the actual battery.

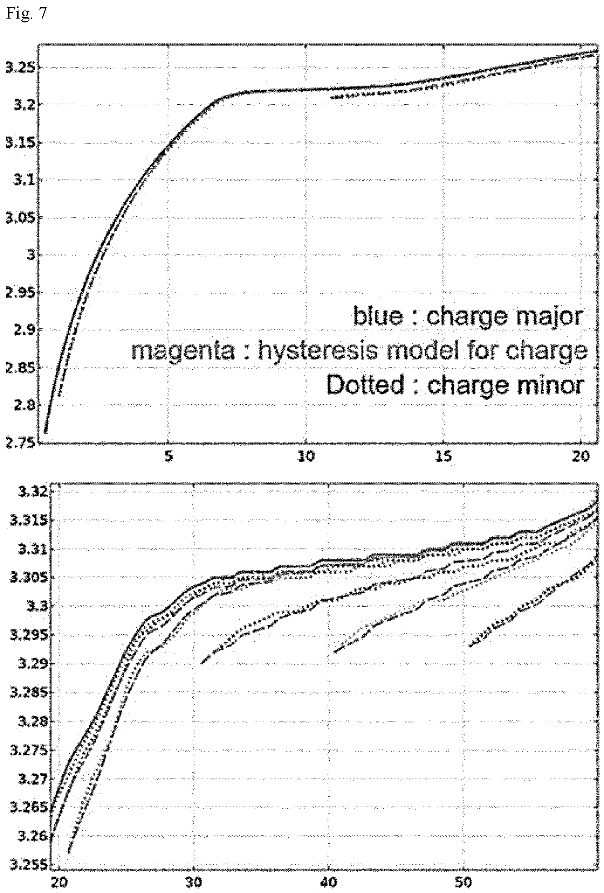

Figure 7 is the actual charging and discharging behavior of the battery simulated in Figure 4. Comparing Figures 4 and 7, it can be known that the results to be consistent with the reality can be obtained according to the method of the present application.

The present application can effectively obtain the results to be consistent with the reality by simulating the charging and discharging behavior of the secondary battery in such a manner.

In performing simulation of the charging and discharging behavior in the secondary battery through the above-described method, known software, and the like may be used.

Such a method of the present application may also be provided as a hardware state or system state in which the method is stored.

Therefore, the present application also relates to a hardware device or system in which the method for simulating charging and discharging behavior of a secondary battery is stored.

In one example, the device or system may be a so-called battery management device or battery management system (BMS). As known, the battery management device or battery management system (BMS) is devices and systems which measure various elements such as current, voltage and/or temperature of a secondary battery applied to electric vehicles or hybrid electric vehicles, and the like through sensors, and the like to control the charging and/or discharging state and remaining amount, and the like of the secondary battery. Such a device performs mainly state control of a secondary battery, disconnection of a battery or secondary battery during an emergency, adjustment of imbalances present in secondary battery parameters within an integrated battery module or pack, charging information provision of secondary battery, information provision on a secondary battery state, information provision on driver displays and alarms, prediction of battery usable ranges (mileage, etc.), optimal charging algorithm provision for charging of an integrated battery modules or pack, or a secondary battery, rechargeable access means provision to individual secondary batteries, responding to changes in vehicle driving mode, and the like.

According to the method of the present application, it is possible to effectively provide simulation results for charging and discharging behavior of a secondary battery, and by linking such results with algorithms of a battery management device or system, it is possible to provide an optimal operating environment for the secondary battery. In addition, the algorithms of the battery management device or system linked to the method of the present application can effectively adjust the performance of the secondary batter according to acceleration, braking, idling, and vehicle operation mode (electric vehicle mode, hybrid mode) by providing, for example, an electric and motor control system suitable for a vehicle driving mode.

The method of applying the method of the present application to the battery management device or system is not particularly limited, and the battery management device or system can be constructed by applying appropriate known algorithm configuration methods, and device and system configuration methods.

**Claims**

1. A method for simulating charging and discharging behavior of a secondary battery, comprising:

   simulating the charging and discharging behavior of the secondary battery through electrochemical modeling; and
   correcting the simulation results from the electrochemical modeling by applying hysteresis modeling.

2. The method according to claim 1, wherein the simulating of the charging and discharging behavior of the secondary battery through the electrochemical modeling is performed by using DFN modeling.

3. The method according to claim 1, wherein the simulating of the charging and discharging behavior of the secondary battery through the electrochemical modeling is performed by using one or more of Equations 1 to 5 below:

[Equation 1]

$$\frac{\partial C_s}{\partial t} = D_s \frac{\partial^2 C_s}{\partial r^2} + \frac{2 D_s}{r} \frac{\partial C_s}{\partial r}$$

wherein, the Cs is a lithium concentration (unit: mol/m$^3$) in a solid particle phase, the r is a radius (unit: m) of a particle, and the Ds is a lithium ion diffusion coefficient (unit: cm$^2$/s):

[Equation 2]

$$\frac{\partial (\varepsilon_e c_e)}{\partial t} = \nabla \cdot (D_{e,eff} \nabla c_e) + a_s (1 - t_+^0) j$$

wherein, the $\varepsilon_e$ is a volume fraction of an electrolyte, the $D_{e,eff}$ is a diffusion coefficient (unit: cm$^2$/s) of an electrolyte

medium, and the $c_e$ is a concentration (unit: mol/m³) of the electrolyte:

[Equation 3]

$$\nabla \cdot (\sigma_{eff} \nabla \Phi_s) = a_s F j$$

wherein, the $\sigma_{eff}$ is an effective electrical conductivity (unit: S/cm) of the solid phase, the $\Phi_s$ is a potential (unit: V) of the solid phase, and the $\alpha_s$ is a specific interfacial area (unit: m²/m³) between solids, the F is Faraday's constant (96,487 C/eq), and the j is a molar flux of lithium passing through a boundary between the solid phase and the electrolyte:

[Equation 4]

$$\nabla \cdot (\kappa_{eff} \nabla \Phi_e + \kappa_{D,eff} \nabla \ln c_e) + a_s F j = 0$$

wherein, the $\kappa_{eff}$ is an effective ionic conductivity (S/cm) of the electrolyte, the $\Phi_e$ is a potential (unit: V) of the electrolyte, the $c_e$ is a concentration of the electrolyte, and the $\alpha_s$ is a specific interfacial area (unit: m²/m³) between the solids, the F is Faraday's constant (96,487 C/eq), and the j is the molar flux of lithium passing through the boundary between the solid phase and the electrolyte.

[Equation 5]

$$i = i_0^a \left[\exp\left(\frac{\alpha_a F}{RT}\eta\right) - \exp\left(-\frac{\alpha_c F}{RT}\eta\right)\right]$$

wherein, the i is a current density (unit: A/cm²) passing through an interface, the $i_0$ is an exchange current density (unit: A/cm²) for an electrode and an electrolyte interface, the $\alpha_a$ is a charge transfer coefficient of an anodic reaction, the $\alpha_c$ is a charge transfer coefficient of a cathodic reaction, the $\eta$ is an over potential, the F is the Faraday constant, the R is the gas constant, and the T is an absolute temperature (unit: K).

4. The method according to claim 3, wherein in the simulating of the charging and discharging behavior of the secondary battery the through the electrochemical modeling, all of Equations 1 to 5 are used.

5. The method according to claim 1, wherein the correcting of the simulation results from the electrochemical modeling by applying the hysteresis modeling comprises converging a hysteresis generated when switching from charging to discharging and generated when switching from the discharging to the charging in the simulation results from the electrochemical modeling over time.

6. The method according to claim 3, wherein the correcting of the simulation results from the electrochemical modeling by applying the hysteresis modeling is performed using Equation 6 below:

[Equation 6]

$$\frac{dh(z,t)}{dz} = \gamma sgn(\dot{z})(M(z,\dot{z}) - h(z,t))$$

wherein, the h is a voltage deviation by hysteresis, the z is the state of charge (SOC) or a stoichiometry of a material, and the M is a maximum voltage gap in a major hysteresis loop, and the $\gamma$ is a regulation constant.

7. A hardware device, in which the method of any one of claims 1 to 6 is stored.

8. A battery management device, in which the method of any one of claims 1 to 6 is stored.

Fig. 1

Fig. 2

Fig. 3

Fig. 4

Fig. 5

Fig. 6

EP 4 564 025 A1

Estimated OCV = OCV charge major + h - M

Example : OCV estimation at RSOC50

Fig. 7

blue : charge major
magenta : hysteresis model for charge
Dotted : charge minor

## INTERNATIONAL SEARCH REPORT

| International application No. |
| --- |
| **PCT/KR2023/012078** |

**A. CLASSIFICATION OF SUBJECT MATTER**

**G01R 31/367**(2019.01)i; **G01R 31/36**(2006.01)i; **G01R 31/374**(2019.01)i; **G01R 31/396**(2019.01)i; **G01R 31/382**(2019.01)i; **G01R 19/30**(2006.01)i; **H01M 10/48**(2006.01)i

According to International Patent Classification (IPC) or to both national classification and IPC

**B. FIELDS SEARCHED**

Minimum documentation searched (classification system followed by classification symbols)

G01R 31/367(2019.01); G01R 31/36(2006.01); G06F 119/08(2020.01); G06F 30/23(2020.01); H01M 10/48(2006.01); H02J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전지(battery), 모델링(modeling), 히스테리시스(hysteresis), 충전(charge), 방전 (discharge), 전기화학적(electro-chemical)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0014000 A (PUSAN NATIONAL UNIVERSITY INDUSTRY-UNIVERSITY COOPERATION FOUNDATION) 08 February 2021 (2021-02-08) See paragraphs [0008]-[0014] and claims 1-3. | 1-2,5,7-8 |
| A | | 3-4,6 |
| Y | KR 10-1792537 B1 (FOUNDATION OF SOONGSIL UNIVERSITY-INDUSTRY COOPERATION) 02 November 2017 (2017-11-02) See paragraphs [0008]-[0111] and claims 1-5. | 1-2,5,7-8 |
| A | KR 10-1902529 B1 (RENAULT S.A.S) 28 September 2018 (2018-09-28) See claims 1-10. | 1-8 |
| A | KR 10-2022-0038789 A (TWAICE TECHNOLOGIES GMBH) 29 March 2022 (2022-03-29) See claims 1-15. | 1-8 |

☑ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **22 November 2023** | **22 November 2023** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/012078** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2017-0082695 A1 (FARADAY&FUTURE INC.) 23 March 2017 (2017-03-23)<br>See entire document. | 1-8 |

Form PCT/ISA/210 (second sheet) (July 2022)

## INTERNATIONAL SEARCH REPORT
### Information on patent family members

International application No.

**PCT/KR2023/012078**

| Patent document cited in search report | | | Publication date (day/month/year) | Patent family member(s) | | | Publication date (day/month/year) |
|---|---|---|---|---|---|---|---|
| KR | 10-2021-0014000 | A | 08 February 2021 | None | | | |
| KR | 10-1792537 | B1 | 02 November 2017 | None | | | |
| KR | 10-1902529 | B1 | 28 September 2018 | CN | 103688181 | A | 26 March 2014 |
| | | | | EP | 2710392 | A1 | 26 March 2014 |
| | | | | EP | 2710392 | B1 | 04 July 2018 |
| | | | | FR | 2975501 | A1 | 23 November 2012 |
| | | | | FR | 2975501 | B1 | 31 May 2013 |
| | | | | JP | 2014-520254 | A | 21 August 2014 |
| | | | | JP | 6249942 | B2 | 20 December 2017 |
| | | | | KR | 10-2014-0034834 | A | 20 March 2014 |
| | | | | US | 2014-0203813 | A1 | 24 July 2014 |
| | | | | WO | 2012-160301 | A1 | 29 November 2012 |
| KR | 10-2022-0038789 | A | 29 March 2022 | CN | 114245898 | A | 25 March 2022 |
| | | | | DE | 102019121461 | B3 | 24 December 2020 |
| | | | | EP | 4010837 | A1 | 15 June 2022 |
| | | | | JP | 2022-543322 | A | 11 October 2022 |
| | | | | JP | 7255020 | B2 | 10 April 2023 |
| | | | | US | 2022-0374568 | A1 | 24 November 2022 |
| | | | | WO | 2021-023346 | A1 | 11 February 2021 |
| US | 2017-0082695 | A1 | 23 March 2017 | CN | 106546922 | A | 29 March 2017 |
| | | | | US | 10790688 | B2 | 29 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220101842